# EUROPÄISCHE PATENTSCHRIFT

(11) **EP 0 982 640 B1**
(45) Veröffentlichungstag und Bekanntmachung des Hinweises auf die Patenterteilung: **24.09.2003**
(21) Anmeldenummer: 99109501.9
(22) Anmeldetag: 12.05.1999
(51) Int. Cl.: G05B 19/042, D05B 69/00

(54) **Steuervorrichtung für eine Industrienähmaschine**
Control device for an industrial sewing machine
Dispositif de contrôle pour une machine à coudre industrielle

(30) Priorität: 04.07.1998 DE 19830042
(43) Veröffentlichungstag der Anmeldung: 01.03.2000
(73) Patentinhaber: Frankl & Kirchner GmbH. & Co. KG Fabrik für Elektromotoren und elektrische Apparate, D-68723 Schwetzingen (DE)
(72) Erfinder: Schmidt, Thomas, 69231 Rauenberg (DE); Knop, Michael, 68804 Altlussheim (DE); Sinn, Wolfgang, 69231 Rauenberg (DE); Böhm, Rainer, 69121 Heidelberg (DE); Faulhaber, Michael, 68199 Mannheim (DE)
(74) Vertreter: Schneck, Herbert, Dipl.-Phys., Dr.

(56) Entgegenhaltungen:
- DE-A- 3 627 837
- DE-A- 3 632 479
- DE-A- 3 924 824

## Beschreibung

Die Erfindung richtet sich auf eine Steuervorrichtung für eine Industrienähmaschine, wobei über Schalteinrichtungen, wie Schalter, Taster, Sensoren oder dergleichen Funktionen und Schaltzustände ein- bzw. ausschaltbar sind, indem ein bestimmter Spannungspegel an eine Eingangsschaltung der Steuerung angelegt wird, um einen bestimmten Schaltzustand zu erzeugen.

Aus der Druckschrift DE 36 32 479 ist eine Solenoidtreiberschaltung zum Bewegen einer Stoffdrückerplatte einer Nähmaschine bekannt.

Im Bereich der Industrienähmaschinen sind Spannungspegel in Form der Spannungen 0V, + 5V, + 12V und + 24V als Schaltpegel definiert. Je nach Art der Nähmaschine, nach Nähmaschinenhersteller, Anwendung und Verdrahtung werden Schalteinrichtungen eingesetzt, die mit den erwähnten unterschiedlichen Schaltpegeln arbeiten. Bei bekannten Steuervorrichtungen sind wegen der unterschiedlichen Schaltpegel unterschiedliche Eingangsschaltungen bzw. Schaltungsdimensionierungen erforderlich. Es ist bei Eingangsschaltungen der in Betracht stehenden Art auch schon bekannt, durch programmgesteuerte Zuschaltung von bestimmten Schaltungsteilen, sogenannten Pull-up- oder Pull-down-Widerständen, die Schaltpegel zur Aktivierung der Eingangsschaltung zu verändern, wobei die bekannten Schaltungen allerdings den Nachteil aufweisen, daß die Eingangsschaltung nur dann aktiviert wird, wenn ein einziger bestimmter Schaltpegel angelegt wird. Dies hat zur Folge, daß bei der Herstellung von Steuerungen für unterschiedliche Nähmaschinenfabrikate oder Anwendungen für nahezu gleiche Anforderungen unterschiedliche Steuerungen zur Verfügung gestellt werden müssen, weil die Schaltpegel für die einzelnen Schalteinrichtungen unterschiedlich definiert sind.

Hiervon ausgehend liegt der Erfindung die Aufgabe zugrunde, eine Vorrichtung der eingangs genannten Art so auszugestalten, daß die aus dem Stand der Technik bekannten Nachteile vermieden werden und es dementsprechend möglich ist, ein und dieselbe Steuervorrichtung für ganz unterschiedliche Nähmaschinen und Anwendungsbereiche einzusetzen.

Diese Aufgabe wird erfindungsgemäß dadurch gelöst, daß beim Anlegen unterschiedlicher Eingangsspannungspegel jeweils gleiche Schaltzustände generiert werden. Dementsprechend ist die erfindungsgemäße Steuervorrichtung für ganz unterschiedliche Nähmaschinen einsetzbar, da sie die entsprechend unterschiedlichen Eingangsspannungspegel verarbeiten kann.

Vorzugsweise ist vorgesehen, daß die Eingangsschaltung für jede anzulegende Eingangsspannung, wie z.B. 0V, 24V einen Eingangs-Schaltungsteil aufweist und den Eingangs-Schaltungsteil eine Aktivierungseinrichtung derart zugeordnet ist, daß je nach Anlegen einer bestimmten Eingangsspannung jeweils ein zugeordnetes Eingangs-Schaltungsteil derart aktiviert wird, daß das Ausgangsspannungssignal das gleiche ist, unabhängig von der angelegten Eingangsspannung.

Bei einer alternativen Ausführungsform ist vorgesehen, daß die Steuereinheit über einen Analog-Digital-Wandler die Aktvierung eines Eingangs erkennt.

Nachfolgend wird die Erfindung anhand eines bevorzugten Ausführungsbeispiels in Verbindung mit der Zeichnung näher erläutert. Dabei zeigen:
- Fig. 1 und 2: eine blockschaltbildartige Darstellung einer Steuervorrichtung und der Spannungspegel im Ein- und Aus-Zustand nach dem Stand der Technik und
- Fig. 3 und 4: korrespondierende Darstellungen einer erfindungsgemäßen Steuervorrichtung.

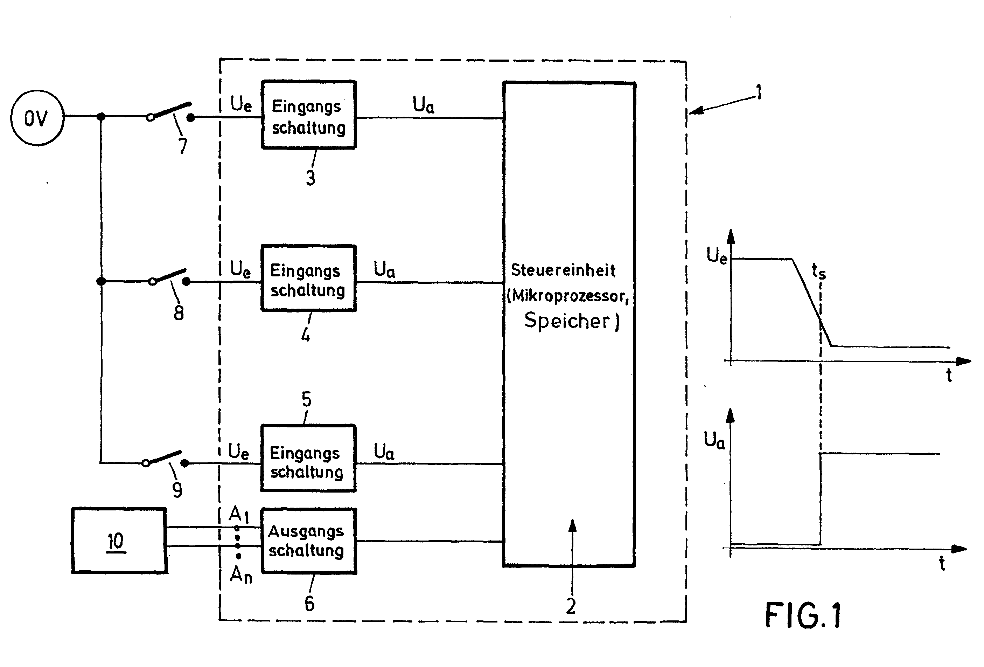

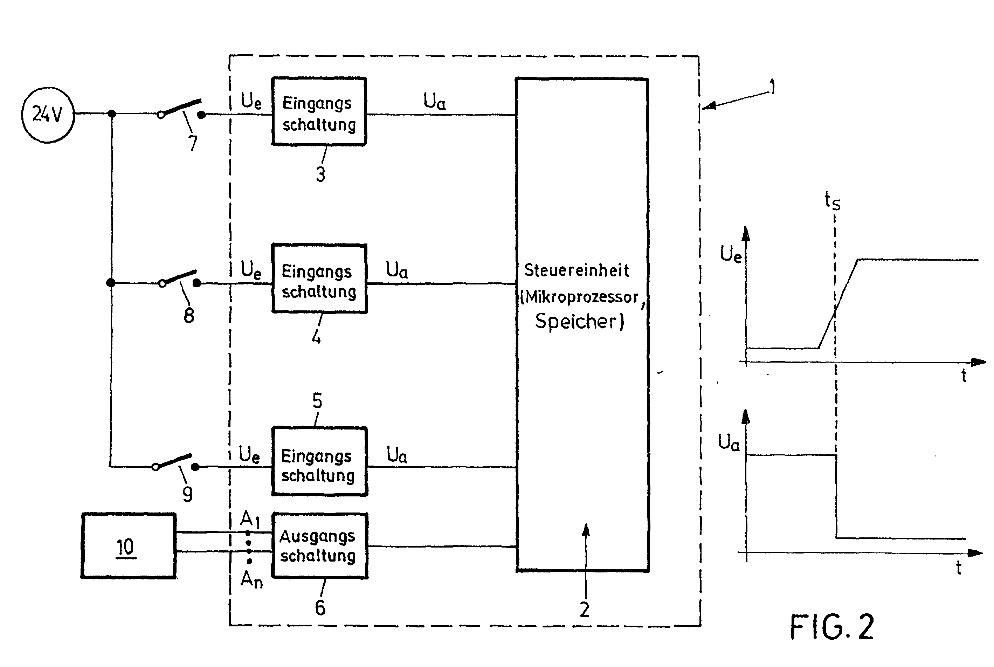

Eine in Fig. 1 und 2 dargestellte Steuervorrichtung 1 umfaßt eine Steuereinheit bzw. einen Mikroprozessor 2 mit Speicher sowie Eingangsschaltungen 3 bis 5 und eine Ausgangsschaltung 6 zum Anschluß von peripheren Geräten 10 (Magnete, Ventile, Motoren usw.).

Den Eingangsschaltungen 3 bis 5 liegt eine Eingangsspannung Uₑ an und ausgangsseitig wird in diesen Schaltungen eine Ausgangsspannung Uₐ generiert.

Diese Eingangsschaltungen 3 bis 5 liegen über Schalteinrichtungen 7, 8, 9 an einer Schaltspannung von 0V.

In Fig. 1 rechts ist die Eingangsspannung Uₑ in Abhängigkeit von der Zeit und ebenso die Ausgangsspannung Uₐ vor und nach einer Schaltzustandsänderung zum Zeitpunkt tₛ dargestellt.

Die Eingangsschaltungen 3 bis 5 umfassen, wie im einzelnen nicht dargestellt, eine Transistorstufe mit Eingangsfiltern und Pull-up-Widerstand gegen 24V oder 5V. Die Eingangsspannung bzw. das Eingangssignal Uₑ wird in dieser Eingangsschaltung invertiert als Logiksignal Uₐ = 5V und an die Steuereinheit 2 weitergeleitet.

Die Darstellung in Fig. 2 stimmt mit derjenigen nach Fig. 1 grundsätzlich überein, wobei dort lediglich die Verhältnisse dargestellt sind, wenn als Betriebsspannung eine Spannung von 24V eingesetzt wird.

Die Eingangsschaltungen 3 bis 5 umfassen dementsprechend wiederum eine Transistorstufe mit Eingangsfiltern und Pull-down-Widerstand gegen 0V. Dort wird das Eingangssignal Uₑ invertiert als Logiksignal Uₐ = 0V und an die Steuereinheit 2 weitergeleitet.

Aus Fig. 1 und 2 ist erkennbar, daß die Schaltpegel Uₐ am Ausgang in Abhängigkeit von der verwendeten Eingangsspannung Uₑ unterschiedlich sind, so daß jeweils nur eine ganz bestimmte Nähmaschine mit einer derartigen Steuervorrichtung betreibbar ist, auf welche diese Eingangsspannungen zugeschnitten sind.

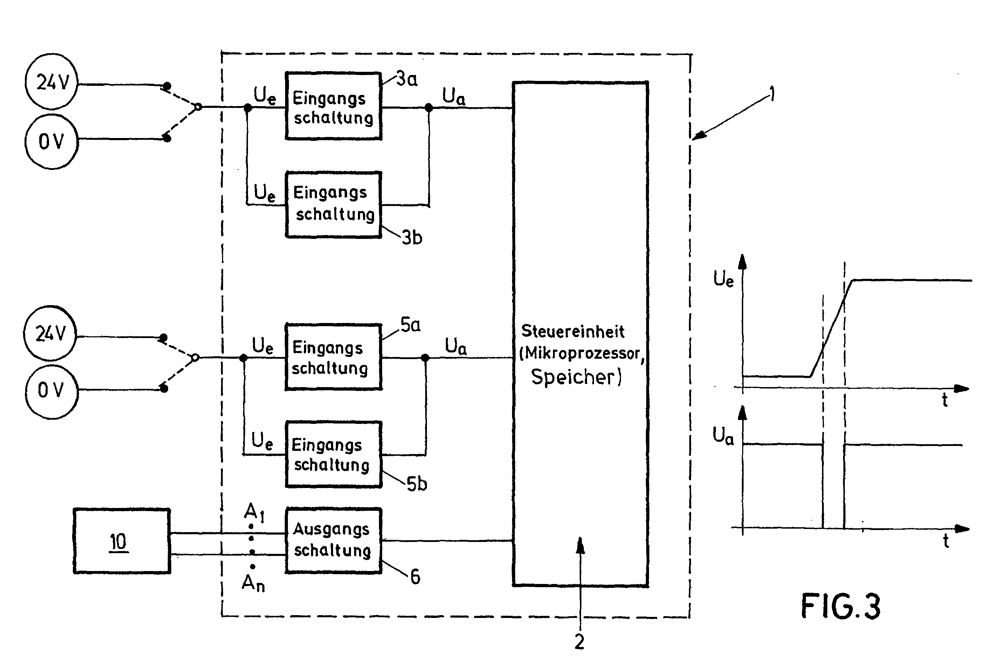

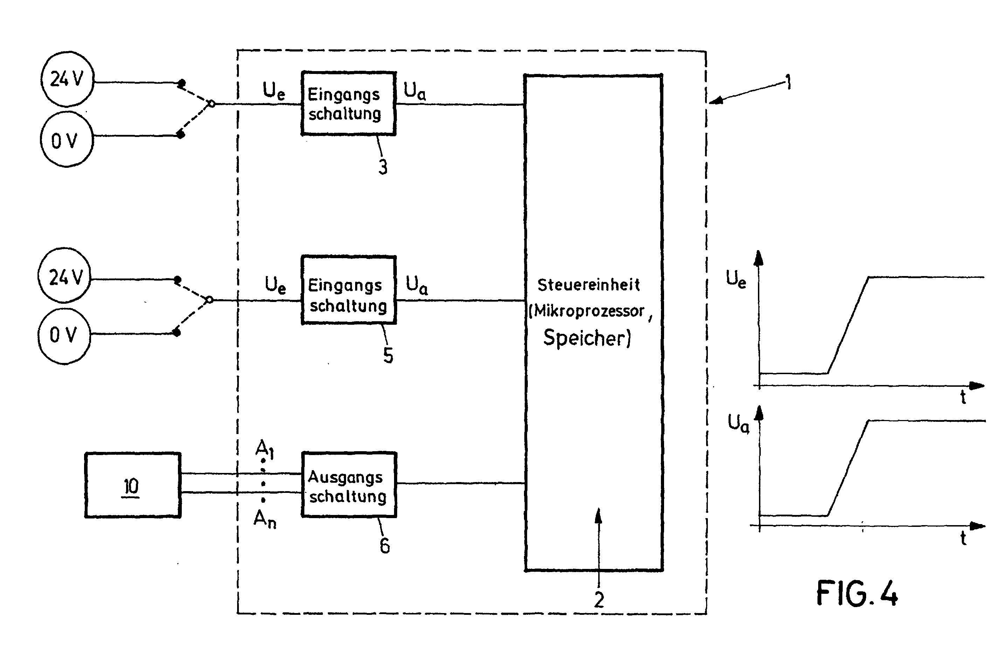

Demgegenüber ist aus Fig. 3 und 4 erkennbar, daß aufgrund der erfindungsgemäßen Schaltungsanordnung, die nachfolgend näher beschrieben wird, jeweils gleiche Ausgangsspannungspegel Uₐ erreicht werden.

Eine in Fig. 3 dargestellte erfindungsgemäße Eingangsschaltung 3 bzw. 5 besteht aus mindestens zwei einzelnen Schaltungsteilen, 3a, 3b bzw. 5a, 5b, welche jeweils Transistorstufen mit Eingangsfiltern umfassen. In diesem Ausführungsbeispiel kann der Eingangspegel 0V oder 24V betragen. Je nachdem welcher Eingangspegel anliegt, wird eine der beiden Eingangs-Schaltungsteile 3a oder 3b bzw. 5a oder 5b aktiviert, so daß sichergestellt wird, daß jeweils eine Ausgangsspannung Uₐ von 5V, wie in Fig. 3 rechts dargestellt, generiert wird unabhängig davon, ob am Eingang Uₑ der Schaltpegel 0V oder 24V anliegt.

Bei der in Fig. 4 dargestellten Ausführungsform werden die Eingangsschaltpegel Uₑ, welche beispielsweise wieder 0V oder 24V betragen können, über die Eingangsschaltungen 3 bzw. 5, die jeweils ein Ausgangssignal Uₐ generieren, direkt an den Analog-Digital-Wandler der Steuereinheit 2 weitergeleitet, wobei innerhalb der Steuereinheit 2 der analoge Schaltpegel ausgewertet und der Schaltzustand entsprechend erkannt wird. Dabei wird auch in diesem Ausführungsbeispiel durch die entsprechende Auswertung, wie in Fig. 4 rechts dargestellt, erreicht, daß unabhängig davon, ob der Eingangspegel 0V oder 24V beträgt, der richtige Schaltzustand generiert wird.

## Patentansprüche

1. Steuervorrichtung (1) für eine Industrienähmaschine, wobei über Schalteinrichtungen (7,8,9), wie Schalter, Taster, Sensoren oder dergleichen Funktionen und Schaltzustände ein- bzw. ausschaltbar sind, indem ein bestimmter Spannungspegel an eine Eingangsschaltung (3,4,5) der Steuerung angelegt wird, wobei die Eingangsschaltung (3,4,5) ein Ausgangssignal erzeugt, **dadurch gekennzeichnet, daß** beim Anlegen unterschiedlicher Eingangsspannungspegel Uₑ jeweils gleiche Ausgangsspannungspegel Uₐ generiert werden.

2. Steuervorrichtung nach Anspruch 1, **dadurch gekennzeichnet, daß** die Eingangs-Schaltung (3, 5) für jede anzulegende Eingangsspannung, wie z.B. 0V, 24V, einen Eingangs-Schaltungsteil (3a, 3b bzw. 5a, 5b) aufweist und den Eingangs-Schaltungsteilen (3a, 3b bzw. 5a, 5b) eine Aktivierungseinrichtung derart zugeordnet ist, daß je nach Anlegen einer bestimmten Eingangsspannung Uₑ jeweils ein zugeordnetes Eingangs-Schaltungsteil (3a, 3b bzw. 5a, 5b) derart aktiviert wird, daß das Ausgangsspannungssignal Uₐ das gleiche ist unabhängig von der angelegten Eingangsspannung Uₑ.

3. Steuervorrichtung, insbesondere nach Anspruch 1, **dadurch gekennzeichnet, daß** die Steuereinheit (2) über einen Analog-Digital-Wandler den angelegten Spannungspegel Uₑ mißt und anhand von veränderbar abgespeicherten Referenzwerten entscheidet, welcher Schaltzustand vorliegt.

## Claims

1. A control equipment (1) for an industrial sewing machine, it being possible, via switchgears (7, 8, 9) such as switches, probes, sensors or the like, to switch on or off functions and connection states by a certain voltage level being applied to an input circuit (3, 4, 5) of the control, the input circuit generating an output signal, **characterized in that** upon the application of varying input voltages Uₑ, the output voltages Uₐ generated are the same in each case.

2. A control equipment according to claim 1, **characterized in that** the input circuit (3, 5) for each input voltage to be applied, for example 0 V, 24 V, comprises an input circuit element (3a, 3b and 5a, 5b, respectively) and **in that** an activation equipment is allocated to the input circuit elements (3a, 3b and 5a, 5b, respectively) such that, depending on the application of a certain input voltage Uₑ, an associated input circuit element (3a, 3b and 5a, 5b) is activated such that the output voltage signal Uₐ is the same regardless of the input voltage Uₑ applied.

3. A control equipment, in particular according to claim 1, **characterized in that** the control unit (2) measures the applied voltage Uₑ via an analogue-to-digital converter and, on the basis of modifiably stored reference values, decides which connection state prevails.

## Revendications

1. Dispositif de contrôle (1) pour une machine à coudre industrielle, des fonctions et états de connexion étant connectables, respectivement déconnectables, par la voie de mécanismes de connexion (7, 8, 9) comme commutateurs, palpeurs, détecteurs ou analogue, en un certain niveau de tension étant appliqué à un circuit d'entrée (3, 4, 5) qui engendre un signal de sortie, **caractérisé en ce que** des niveaux de tension de sortie Uₐ égaux sont générés lors de l'application de niveaux de tension d'entrée Uₑ différents.

2. Dispositif de contrôle selon la revendication 1, **caractérisé en ce que** le circuit d'entrée (3, 5) comprend un élément de circuit d'entrée (3a, 3b, respectivement Sa, 5b) pour chaque tension d'entrée appliquée, par exemple 0 V, 24 V, et **en ce qu'**un dispositif d'activation est conjugué aux éléments de circuit d'entrée (3a, 3b, respectivement 5a, 5b) de telle sorte que selon l'application d'une certaine tension d'entrée Uₑ, un élément de circuit d'entrée (3a, 3b, respectivement Sa, 5b) conjugué soit activé de telle sorte que le signal de tension de sortie Uₐ soit le même indépendamment de la tension d'entrée Uₑ appliquée.

3. Dispositif de contrôle selon la revendication 1, **caractérisée en ce que** l'unité de contrôle (2), par la voie d'un convertisseur analogique-numérique, mesure le niveau de tension Uₑ appliqué et, au moyen de valeurs de référence mémorisées de façon modifiable, décide quel état de connexion est présent.
